# EUROPEAN PATENT APPLICATION

(11) **EP 4 601 146 A1**
(43) Date of publication of application: **13.08.2025**
(21) Application number: 23887814.4
(22) Date of filing: 30.10.2023
(51) Int. Cl.: H02J 7/00, H01M 10/44

(54) **CHARGING CONTROL METHOD AND APPARATUS, AND ELECTRONIC DEVICE**

(30) Priority: 10.11.2022 CN 202211406693
(71) Applicant: Vivo Mobile Communication Co., Ltd., Dongguan, Guangdong 523863 (CN)
(72) Inventor: YAO, Chengwei, Dongguan, Guangdong 523863 (CN)
(74) Representative: Murgitroyd & Company
(86) International application number: PCT/CN2023/127461
(87) International publication number: WO 2024/099124

(57) **Abstract**

This application discloses a charging control method and apparatus, and an electronic device, and pertains to the field of communication technologies. The method includes: in a case that a charger is connected, detecting values of a first flag and a second flag of a charging chip register, where the first flag is used to indicate a charging status, and the second flag is used to indicate a magnitude relationship between a battery voltage and a system voltage; and changing a current charging stage based on a change in a value of at least one of the first flag and the second flag.

## Description

### CROSS-REFERENCE TO RELATED APPLICATION

This application claims priority to Chinese Patent Application No. 202211406693.5, filed on November 10, 2022 and entitled "CHARGING CONTROL METHOD AND APPARATUS, AND ELECTRONIC DEVICE", which is incorporated herein by reference in its entirety.

### TECHNICAL FIELD

This application pertains to the field of communication technologies, and specifically relates to a charging control method and apparatus, and an electronic device.

### BACKGROUND

In a charging process of a terminal, an analog-to-digital converter (Analog-to-Digital Converter, ADC) module needs to detect a change process of an external signal, to control progress of different charging stages.

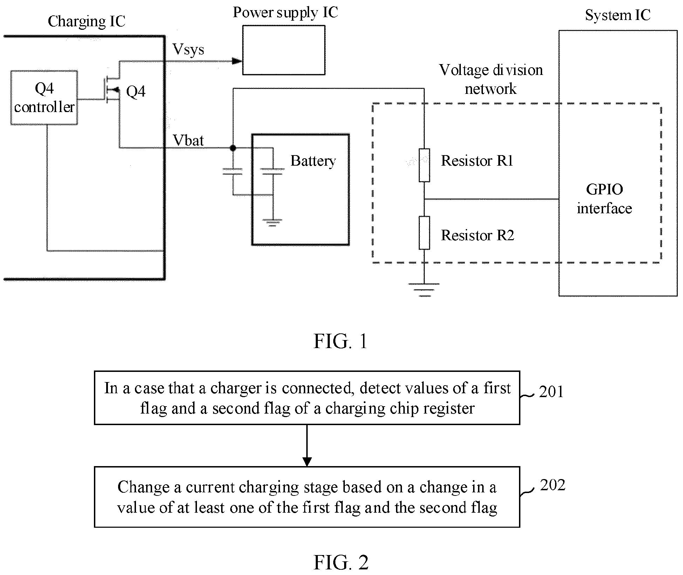

For a charging chip/integrated circuit (Integrated Circuit, IC) without an ADC module, one solution to implement a charging function is to build a detection circuit outside the charging chip to detect a change process of an external signal. As shown in FIG. 1, a voltage division network is constructed by using a pull-up resistor R1 and a pull-down resistor R2, and the voltage division network is connected to a general purpose input/output (General Purpose Input Output, GPIO) interface (this interface has an ADC function) of a system IC, to provide a power supply for the system IC.

However, when a battery voltage Vbat is greater than zero (the GPIO interface is already electrified) and a system voltage Vsys is zero (a power supply chip does not normally supply power), hardware of the system IC fails, or the terminal cannot be powered on.

### SUMMARY

Embodiments of this application aim to provide a charging control method and apparatus, and an electronic device, to avoid a case that hardware of a system IC fails or a terminal cannot be powered on in a process of charging by using a charging IC without an ADC module, thereby improving reliability of the terminal.

According to a first aspect, an embodiment of this application provides a charging control method. The method includes:
in a case that a charger is connected, detecting values of a first flag and a second flag of a charging chip register, where the first flag is used to indicate a charging status, and the second flag is used to indicate a magnitude relationship between a battery voltage and a system voltage; and
changing a current charging stage based on a change in a value of at least one of the first flag and the second flag.

According to a second aspect, an embodiment of this application provides a charging control apparatus, including:
a detection module, configured to: in a case that a charger is connected, detect values of a first flag and a second flag of a charging chip register, where the first flag is used to indicate a charging status, and the second flag is used to indicate a magnitude relationship between a battery voltage and a system voltage; and
a control module, configured to change a current charging stage based on a change in a value of at least one of the first flag and the second flag.

According to a third aspect, an embodiment of this application provides an electronic device. The electronic device includes a processor, a memory, and a program or an instruction that is stored in the memory and executable on the processor. When the program or the instruction is executed by the processor, the method according to the first aspect is implemented.

According to a fourth aspect, an embodiment of this application provides a readable storage medium. The readable storage medium stores a program or an instruction, and when the program or the instruction is executed by a processor, the method according to the first aspect is implemented.

According to a fifth aspect, an embodiment of this application provides a chip. The chip includes a processor and a communication interface, the communication interface is coupled to the processor, and the processor is configured to run a program or an instruction to implement the method according to the first aspect.

According to a sixth aspect, an embodiment of this application provides a computer program product. The program product is stored in a storage medium, and the program product is executed by at least one processor to implement the method according to the first aspect.

In embodiments of this application, a current charging stage is changed based on a change in a value of at least one of a first flag and a second flag of a charging IC register. This avoids a case that hardware of a system IC fails or a terminal cannot be powered on because a current is mistakenly injected into the system IC, thereby improving reliability of the terminal.

### BRIEF DESCRIPTION OF DRAWINGS

FIG. 1 is a schematic diagram of a principle of a charging chip without an ADC module in the prior art;
FIG. 2 is a schematic flowchart of a charging control method according to an embodiment of this application;
FIG. 3 is a first schematic diagram of charging control logic according to an embodiment of this application;
FIG. 4 is a second schematic diagram of charging control logic according to an embodiment of this application;
FIG. 5 is a third schematic diagram of charging control logic according to an embodiment of this application;
FIG. 6 is a schematic diagram of a structure of a charging control apparatus according to an embodiment of this application; and
FIG. 7 is a schematic diagram of a hardware structure of an electronic device according to an embodiment of this application.

### DESCRIPTION OF EMBODIMENTS

The following clearly describes technical solutions in embodiments of this application with reference to accompanying drawings in embodiments of this application. It is clear that the described embodiments are a part rather than all of embodiments of this application. All other embodiments obtained by a person of ordinary skill in the art based on embodiments of this application shall fall within the protection scope of this application.

In the specification and claims of this application, the terms "first", "second", and so on are intended to distinguish between similar objects but do not indicate a specific order or sequence. It should be understood that the data termed in such a way is interchangeable in proper circumstances so that embodiments of this application can be implemented in orders other than the order illustrated or described herein. Objects distinguished by "first" and "second" are generally of a same category, and a quantity of objects is not limited. For example, there may be one or more first objects. In addition, in the specification and the claims, "and/or" represents at least one of connected objects, and the character "/" generally represents an "or" relationship between associated objects.

FIG. 2 is a schematic flowchart of a charging control method according to an embodiment of this application. As shown in FIG. 2, an embodiment of this application provides a charging control method, applied to an electronic device. The electronic device may be a terminal, for example, a mobile phone. The method includes the following steps:
Step 101: In a case that a charger is connected, detect values of a first flag and a second flag of a charging chip register, where the first flag is used to indicate a charging status, and the second flag is used to indicate a magnitude relationship between a battery voltage and a system voltage.
Step 102: Change a current charging stage based on a change in a value of at least one of the first flag and the second flag.

Specifically, a charging process may be divided into an SBL (Secondary boot loader, secondary boot loader) stage, a UFEI (Unified Extensible Firmware Interface, unified extensible firmware interface) stage, and a kernel (kernel driver loading) stage. The SBL stage and the UFEI stage belong to a pre-charging state (also referred to as a pre-charging mode), and the kernel stage belongs to a fast charging state (also referred to as a fast charging mode, that is, a constant current and constant voltage state). In this embodiment of this application, a new charging solution is implemented by configuring a register flag in an internal controller of a charging IC.

A transition point voltage from the SBL stage to the UFEI stage is a first voltage threshold, denoted by V1, and a transition point voltage from the UFEI stage to the kernel stage is a second voltage threshold, denoted by V2. V2 is greater than V1.

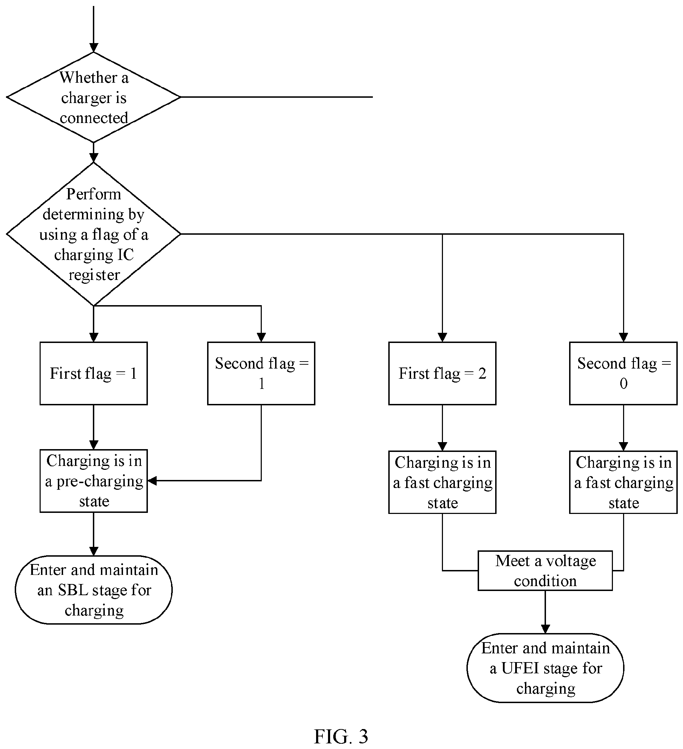

FIG. 3 is a first schematic diagram of charging control logic according to an embodiment of this application. As shown in FIG. 3, in a charging process of a first stage of charging, a first flag and a second flag are used to perform determining. In a case that a charger is connected, if a value of the first flag is a first numerical value (for example, the value of the first flag is equal to 1), indicating that the charging process is still in a pre-charging state, and a value of the second flag is a second numerical value (for example, the value of the second flag is equal to 1), indicating that a battery voltage (denoted by Vbat) is less than a system minimum fixed voltage (denoted by Vsysmin), in this case, it is determined that a current battery voltage is still relatively low, and it may be considered that the current battery voltage does not reach V1. Therefore, an SBL stage is entered and maintained for charging.

If the value of the first flag is a third numerical value (for example, the value of the first flag is equal to 2), indicating that a fast charging state is entered, or the value of the second flag is a fourth numerical value (for example, the value of the second flag is equal to 0), indicating that Vbat is greater than Vsysmin, in this case, it is determined that a voltage condition is met. Therefore, a UFEI stage is entered and maintained for charging.

The value of the second flag is related to magnitudes of Vbat and Vsysmin. When Vbat is greater than Vsysmin, the value of the second flag is equal to 0, and when Vbat is less than Vsysmin, the value of the second flag is equal to 1, where V1 is less than Vsysmin. Vbat and Vsysmin are connected to an input pin of a comparator module in a charging IC. The input voltage value Vbat is compared with the specified reference voltage value Vsysmin. As the voltage Vbat continuously increases in the charging process, whether Vbat is greater than or less than Vsysmin is determined.

The value of the first flag determines a charging status by using a current threshold and a voltage threshold, and a register in an internal controller of the charging IC indicates different charging states: A value 00 (binary) of the register indicates that charging is turned off, a value 01 (binary) of the register indicates the pre-charging state, a value 10 (binary) of the register indicates the fast charging state (a constant current and constant voltage state), and a value 11 (binary) of the register indicates that charging is completed.

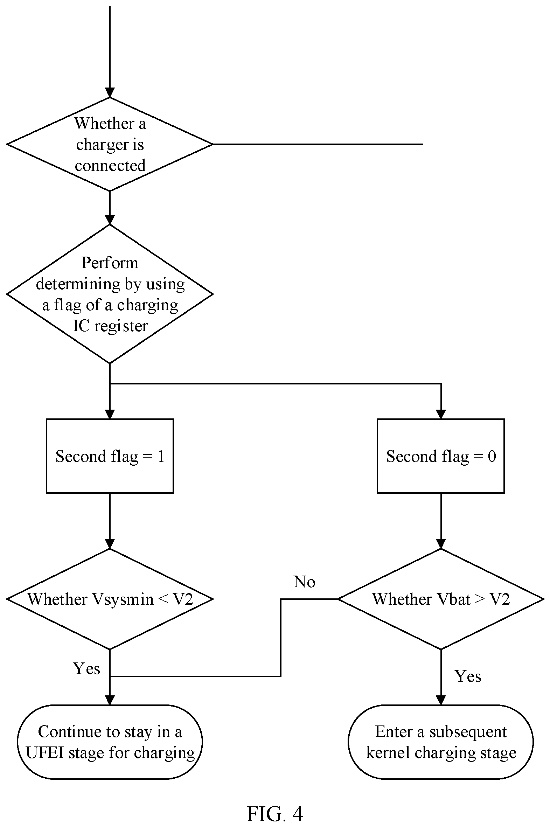

FIG. 4 is a second schematic diagram of charging control logic according to an embodiment of this application. As shown in FIG. 4, in a process of a second stage of charging, a charging stage is determined based on the value of the second flag. In the charging process, the value of Vbat may fluctuate. If the value of the second flag is the second numerical value, indicating that Vbat is less than Vsysmin, in this case, it is determined that a current voltage is still relatively low. In this case, if a voltage V2 is greater than the voltage value Vsysmin, the UFEI stage continues to be maintained for charging. If the value of the second flag is the fourth numerical value, it indicates that Vbat is greater than Vsysmin. In this case, if Vbat is greater than a voltage value of V2, a kernel stage is entered and maintained for charging; and if Vbat is less than or equal to the voltage value of V2, the UFEI stage continues to be maintained for charging.

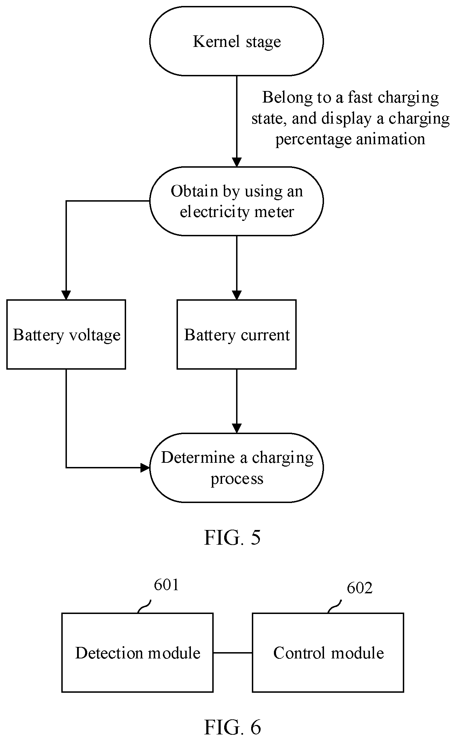

FIG. 5 is a third schematic diagram of charging control logic according to an embodiment of this application. As shown in FIG. 5, in a process of a third stage of charging, after the kernel stage is entered, the voltage Vbat and a current are collected by using an electricity meter IC, and electric power calculation is performed inside the electricity meter IC. The voltage Vbat and the current are reported to a processor by using an IIC (Inter-Integrated Circuit, inter-integrated circuit) serial communication bus, and charging progress is displayed. For example, a charging percentage may be displayed, or a charging percentage animation may be displayed.

In embodiments of this application, a current charging stage is changed based on a change in values of a first flag and a second flag of a charging IC register. This avoids a case that hardware of a system IC fails or a terminal cannot be powered on because a current is mistakenly injected into the system IC, thereby improving reliability of the terminal.

FIG. 6 is a schematic diagram of a structure of a charging control apparatus according to an embodiment of this application. As shown in FIG. 6, an embodiment of this application provides a charging control apparatus, and the apparatus includes a detection module 601 and a control module 602.

The detection module is configured to: in a case that a charger is connected, detect values of a first flag and a second flag of a charging chip register, where the first flag is used to indicate a charging status, and the second flag is used to indicate a magnitude relationship between a battery voltage and a system voltage.

The control module is configured to change a current charging stage based on a change in a value of at least one of the first flag and the second flag.

When the battery voltage is less than a system minimum fixed voltage, a value of the second flag is a second numerical value.

In a pre-charging state, a value of the first flag is a first numerical value.

Optionally, the control module is specifically configured to: in a case that the value of the first flag is the first numerical value and the value of the second flag is the second numerical value, enter and maintain a secondary boot loader stage for charging.

In a fast charging state, the value of the first flag is a third numerical value.

When the battery voltage is greater than the system minimum fixed voltage, the value of the second flag is a fourth numerical value.

Optionally, the control module is specifically configured to: in a case that it is detected that the value of the first flag is the third numerical value or the value of the second flag is the fourth numerical value in a charging process of the secondary boot loader stage, enter and maintain a unified extensible firmware interface stage for charging.

Optionally, the control module is specifically configured to: in a case that it is detected that the value of the second flag is the second numerical value and a second voltage threshold is greater than the system minimum fixed voltage in a charging process of the unified extensible firmware interface stage, continue to maintain the unified extensible firmware interface stage for charging, where the second voltage threshold is a transition point voltage from the unified extensible firmware interface stage to a kernel driver loading stage.

Optionally, the control module is specifically configured to: in a case that it is detected that the value of the second flag is the fourth numerical value and the battery voltage is greater than the second voltage threshold in the charging process of the unified extensible firmware interface stage, enter and maintain the kernel driver loading stage for charging.

Optionally, the apparatus further includes a display module.

The display module is configured to: obtain the battery voltage or a current in a charging process of the kernel driver loading stage, and display charging progress.

Specifically, the foregoing charging control apparatus provided in this embodiment of this application can implement all method steps implemented in the foregoing method embodiment executed by the electronic device, and can achieve same technical effects. Parts and beneficial effects in this embodiment that are the same as those in the method embodiment are not specifically described herein again.

The charging control apparatus in this embodiment of this application may be an apparatus, or may be a component, an integrated circuit, or a chip in a terminal. The apparatus may be a mobile electronic device, or may be a non-mobile electronic device. For example, the mobile electronic device may be a mobile phone, a tablet computer, a laptop computer, a palmtop computer, an in-vehicle electronic device, a wearable device, a ultra-mobile personal computer (ultra-mobile personal computer, UMPC), a netbook, a personal digital assistant (personal digital assistant, PDA), or the like. The non-mobile electronic device may be a server, a network attached storage (Network Attached Storage, NAS), a personal computer (personal computer, PC), a television (television, TV), a teller machine, a self-service machine, or the like. This is not specifically limited in this embodiment of this application.

The charging control apparatus in this embodiment of this application may be an apparatus with an operating system. The operating system may be an Android (Android) operating system, may be an iOS operating system, or may be another possible operating system. This is not specifically limited in this embodiment of this application.

Optionally, an embodiment of this application further provides an electronic device, including a processor, a memory, and a program or an instruction that is stored in the memory and executable on the processor. When the program or the instruction is executed by the processor, processes in the foregoing charging control method embodiment are implemented, and same technical effects can be achieved. To avoid repetition, details are not described herein again.

It should be noted that the electronic device in this embodiment of this application includes the foregoing mobile electronic device and the foregoing non-mobile electronic device.

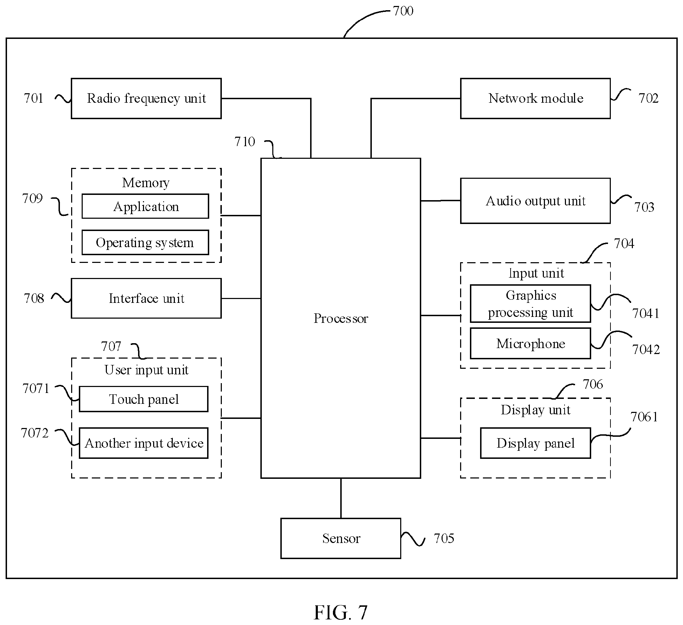

FIG. 7 is a schematic diagram of a hardware structure of an electronic device according to an embodiment of this application. As shown in FIG. 7, the electronic device 700 includes but is not limited to components such as a radio frequency unit 701, a network module 702, an audio output unit 703, an input unit 704, a sensor 705, a display unit 706, a user input unit 707, an interface unit 708, a memory 709, and a processor 710.

A person skilled in the art may understand that the electronic device 700 may further include a power supply (for example, a battery) that supplies power to each component. The power supply may be logically connected to the processor 710 by using a power management system, to implement functions such as charging management, discharging management, and power consumption management by using the power management system. The structure of the electronic device shown in FIG. 7 does not constitute a limitation on the electronic device, and the electronic device may include more or fewer components than those shown in the figure, or combine some components, or have different component arrangements. Details are not described herein.

It should be understood that in this embodiment of this application, the input unit 704 may include a graphics processing unit (Graphics Processing Unit, GPU) 7041 and a microphone 7042. The graphics processing unit 7041 processes image data of a static picture or a video obtained by an image capture apparatus (for example, a camera) in a video capture mode or an image capture mode. The display unit 706 may include a display panel 7061. The display panel 7061 may be configured in a form of a liquid crystal display, an organic light-emitting diode, or the like. The user input unit 707 includes at least one of a touch panel 7071 and another input device 7072. The touch panel 7071 is also referred to as a touchscreen. The touch panel 7071 may include two parts: a touch detection apparatus and a touch controller. The another input device 7072 may include but is not limited to a physical keyboard, a function key (for example, a volume control key or an on/off key), a track control, a mouse, and a joystick. Details are not described herein. The memory 709 may be configured to store a software program and various data. The memory 709 may mainly include a first storage area for storing a program or an instruction and a second storage area for storing data. The first storage area may store an operating system, an application or an instruction required by at least one function (for example, a sound playing function or an image playing function), and the like. In addition, the memory 709 may include a volatile memory or a nonvolatile memory, or the memory 709 may include both a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM), and a direct rambus random access memory (Direct Rambus RAM, DRRAM). The memory 709 in this embodiment of this application includes but is not limited to these and any memory of another proper type.

The processor 710 may include one or more processing units. Optionally, the processor 110 integrates an application processor and a modem processor. The application processor mainly processes operations related to an operating system, a user interface, an application, and the like. The modem processor mainly processes a wireless communication signal, and for example, the modem processor is a baseband processor. It may be understood that the foregoing modem processor may alternatively not be integrated into the processor 710.

The processor 710 is configured to: in a case that a charger is connected, detect values of a first flag and a second flag of a charging chip register, where the first flag is used to indicate a charging status, and the second flag is used to indicate a magnitude relationship between a battery voltage and a system voltage; and change a current charging stage based on a change in a value of at least one of the first flag and the second flag.

Optionally, the processor 710 is further configured to: in a case that a value of the first flag is a first numerical value and a value of the second flag is a second numerical value, enter and maintain a secondary boot loader stage for charging. When the battery voltage is less than a system minimum fixed voltage, the value of the second flag is the second numerical value. In a pre-charging state, the value of the first flag is the first numerical value.

Optionally, the processor 710 is further configured to: in a case that it is detected that the value of the first flag is a third numerical value or the value of the second flag is a fourth numerical value in a charging process of the secondary boot loader stage, enter and maintain a unified extensible firmware interface stage for charging. In a fast charging state, the value of the first flag is the third numerical value. When the battery voltage is greater than the system minimum fixed voltage, the value of the second flag is the fourth numerical value.

Optionally, the processor 710 is further configured to: in a case that it is detected that the value of the second flag is the second numerical value and a second voltage threshold is greater than the system minimum fixed voltage in a charging process of the unified extensible firmware interface stage, continue to maintain the unified extensible firmware interface stage for charging, where the second voltage threshold is a transition point voltage from the unified extensible firmware interface stage to a kernel driver loading stage.

Optionally, the processor 710 is further configured to: in a case that it is detected that the value of the second flag is the fourth numerical value and the battery voltage is greater than the second voltage threshold in the charging process of the unified extensible firmware interface stage, enter and maintain the kernel driver loading stage for charging.

Optionally, the display unit 706 is configured to: obtain the battery voltage or a current in a charging process of the kernel driver loading stage, and display charging progress.

An embodiment of this application further provides a readable storage medium. The readable storage medium stores a program or an instruction. When the program or the instruction is executed by a processor, processes in the foregoing charging control method embodiment executed by the electronic device are implemented, and same technical effects can be achieved. To avoid repetition, details are not described herein again.

The processor is the processor in the electronic device in the foregoing embodiment. The readable storage medium includes a computer readable storage medium, such as a computer read-only memory ROM, a random access memory RAM, a magnetic disk, or an optical disc.

An embodiment of this application further provides a chip. The chip includes a processor and a communication interface, the communication interface is coupled to the processor, and the processor is configured to run a program or an instruction to implement processes in the foregoing charging control method embodiment, and same technical effects can be achieved. To avoid repetition, details are not described herein again.

It should be understood that the chip mentioned in this embodiment of this application may also be referred to as a system-level chip, a system chip, a chip system, a system on chip, or the like.

An embodiment of this application provides a computer program product. The program product is stored in a storage medium. The program product is executed by at least one processor to implement processes in the foregoing charging control method embodiment, and same technical effects can be achieved. To avoid repetition, details are not described herein again.

It should be noted that in this specification, the terms "include", "contain", or their any other variants are intended to cover non-exclusive inclusion, so that a process, a method, an article, or an apparatus that includes a list of elements not only includes those elements but also includes other elements that are not expressly listed, or further includes elements inherent to such a process, method, article, or apparatus. Without more constraints, an element preceded by "includes a ..." does not preclude the existence of additional identical elements in the process, method, article, or apparatus that includes the element. In addition, it should be noted that the scopes of the method and the apparatus in implementations of this application are not limited to performing a function in the shown or discussed order, and may further include performing a function in a basically simultaneous manner or in a reverse order according to a related function. For example, the described method may be performed in a sequence different from the described sequence, and various steps may be added, omitted, or combined. In addition, features described with reference to some examples may be combined in other examples.

Based on the foregoing descriptions of the implementations, a person skilled in the art may clearly understand that the method in the foregoing embodiment may be implemented by software and a necessary universal hardware platform, or certainly may be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, a network device, or the like) to perform the methods described in embodiments of this application.

Embodiments of this application are described above with reference to the accompanying drawings. However, this application is not limited to the foregoing specific implementations. The foregoing specific implementations are merely examples, but are not restrictive. Under the inspiration of this application, a person of ordinary skill in the art may further make many forms without departing from the objective of this application and the protection scope of the claims, and all these forms fall within the protection scope of this application.

## Claims

1. A charging control method, comprising:
in a case that a charger is connected, detecting values of a first flag and a second flag of a charging chip register, wherein the first flag is used to indicate a charging status, and the second flag is used to indicate a magnitude relationship between a battery voltage and a system voltage; and
changing a current charging stage based on a change in a value of at least one of the first flag and the second flag.

2. The charging control method according to claim 1, wherein the changing a current charging stage based on a change in a value of at least one of the first flag and the second flag comprises:
in a pre-charging state, a value of the first flag is a first numerical value;
when the battery voltage is less than a system minimum fixed voltage, a value of the second flag is a second numerical value; and
in a case that the value of the first flag is the first numerical value and the value of the second flag is the second numerical value, entering and maintaining a secondary boot loader stage for charging.

3. The charging control method according to claim 2, wherein the changing a current charging stage based on a change in a value of at least one of the first flag and the second flag further comprises:
in a fast charging state, the value of the first flag is a third numerical value;
when the battery voltage is greater than the system minimum fixed voltage, the value of the second flag is a fourth numerical value; and
in a case that it is detected that the value of the first flag is the third numerical value or the value of the second flag is the fourth numerical value in a charging process of the secondary boot loader stage, entering and maintaining a unified extensible firmware interface stage for charging.

4. The charging control method according to claim 3, wherein the changing a current charging stage based on a change in a value of at least one of the first flag and the second flag further comprises:
in a case that it is detected that the value of the second flag is the second numerical value and a second voltage threshold is greater than the system minimum fixed voltage in a charging process of the unified extensible firmware interface stage, continuing to maintain the unified extensible firmware interface stage for charging, wherein the second voltage threshold is a transition point voltage from the unified extensible firmware interface stage to a kernel driver loading stage.

5. The charging control method according to claim 4, wherein the changing a current charging stage based on a change in a value of at least one of the first flag and the second flag further comprises:
in a case that it is detected that the value of the second flag is the fourth numerical value and the battery voltage is greater than the second voltage threshold in the charging process of the unified extensible firmware interface stage, entering and maintaining the kernel driver loading stage for charging.

6. The charging control method according to claim 5, wherein the method further comprises:
obtaining the battery voltage or a current in a charging process of the kernel driver loading stage, and displaying charging progress.

7. A charging control apparatus, comprising:
a detection module, configured to: in a case that a charger is connected, detect values of a first flag and a second flag of a charging chip register, wherein the first flag is used to indicate a charging status, and the second flag is used to indicate a magnitude relationship between a battery voltage and a system voltage; and
a control module, configured to change a current charging stage based on a change in a value of at least one of the first flag and the second flag.

8. The charging control apparatus according to claim 7, wherein
when the battery voltage is less than a system minimum fixed voltage, a value of the second flag is a second numerical value;
in a pre-charging state, a value of the first flag is a first numerical value; and
the control module is specifically configured to: in a case that the value of the first flag is the first numerical value and the value of the second flag is the second numerical value, enter and maintain a secondary boot loader stage for charging.

9. The charging control apparatus according to claim 8, wherein
in a fast charging state, the value of the first flag is a third numerical value;
when the battery voltage is greater than the system minimum fixed voltage, the value of the second flag is a fourth numerical value; and
the control module is specifically configured to: in a case that it is detected that the value of the first flag is the third numerical value or the value of the second flag is the fourth numerical value in a charging process of the secondary boot loader stage, enter and maintain a unified extensible firmware interface stage for charging.

10. The charging control apparatus according to claim 9, wherein the control module is specifically configured to: in a case that it is detected that the value of the second flag is the second numerical value and a second voltage threshold is greater than the system minimum fixed voltage in a charging process of the unified extensible firmware interface stage, continue to maintain the unified extensible firmware interface stage for charging, wherein the second voltage threshold is a transition point voltage from the unified extensible firmware interface stage to a kernel driver loading stage.

11. The charging control apparatus according to claim 10, wherein the control module is specifically configured to: in a case that it is detected that the value of the second flag is the fourth numerical value and the battery voltage is greater than the second voltage threshold in the charging process of the unified extensible firmware interface stage, enter and maintain the kernel driver loading stage for charging.

12. The charging control apparatus according to claim 11, wherein the apparatus further comprises a display module; and
the display module is configured to: obtain the battery voltage or a current in a charging process of the kernel driver loading stage, and display charging progress.

13. An electronic device, comprising a processor, a memory, and a program or an instruction that is stored in the memory and executable on the processor, wherein when the program or the instruction is executed by the processor, the method according to any one of claims 1 to 6 is implemented.

14. A readable storage medium, wherein the readable storage medium stores a program or an instruction, and when the program or the instruction is executed by a processor, the method according to any one of claims 1 to 6 is implemented.

15. A chip, wherein the chip comprises a processor and a communication interface, the communication interface is coupled to the processor, and the processor is configured to run a program or an instruction to implement the method according to any one of claims 1 to 6.

16. A computer program product, wherein the computer program product is executed by at least one processor to implement the method according to any one of claims 1 to 6.
